# EUROPEAN PATENT SPECIFICATION

(11) **EP 3 503 256 B1**
(45) Date of publication and mention of the grant of the patent: **14.10.2026**
(21) Application number: 18736258.7
(22) Date of filing: 05.01.2018
(51) Int. Cl.: H01M 10/42, H01M 10/0525, H01M 10/052

(54) **SEPARATOR FOR BATTERY TO WHICH FUNCTIONAL BINDER IS APPLIED, AND ELECTROCHEMICAL DEVICE APPLYING SAME**
SEPARATOR FÜR BATTERIE MIT APPLIZIERTEM FUNKTIONELLEN BINDEMITTEL UND ELEKTROCHEMISCHE VORRICHTUNG DAMIT
SÉPARATEUR POUR BATTERIE AUQUEL EST APPLIQUÉ UN LIANT FONCTIONNEL, ET DISPOSITIF ÉLECTROCHIMIQUE L'APPLIQUANT

(30) Priority: 06.01.2017 KR 20170002219; 10.03.2017 KR 20170030566
(43) Date of publication of application: 26.06.2019
(73) Proprietor: LG Energy Solution, Ltd., Seoul 07335 (KR)
(72) Inventor: NAM, Kwan Woo, Daejeon 34122 (KR); YOON, Su Jin, Daejeon 34122 (KR); KWON, Hye Jin, Daejeon 34122 (KR); KIM, Chan Jong, Daejeon 34122 (KR); LEE, Je An, Daejeon 34122 (KR)
(74) Representative: Hoffmann Eitle
(86) International application number: PCT/KR2018/000309
(87) International publication number: WO 2018/128484

(56) References cited:
- WO-A1-2016/034020
- KR-A- 20140 144 192
- KR-A- 20150 069 781
- KR-A- 20160 041 492
- KR-B1- 100 727 248
- KR-B1- 101 330 675
- US-A1- 2016 028 067
- HAIBIN WANG ET AL: "Pyrogallic acid coated polypropylene membranes as separators for lithium-ion batteries", JOURNAL OF MATERIALS CHEMISTRY A, vol. 3, no. 41, 16 September 2015 (2015-09-16), GB, pages 20535 - 20540, XP055511772, ISSN: 2050-7488, DOI: 10.1039/C5TA06381G
- WANG, HAIBIN ET AL.: "Pyrogallic Acid Coated Polypropylene Membranes as Separators for Lithium-ion Batteries", J. MATER. CHEM. A., vol. 3, no. 41, 2015, pages 20535 - 20540, XP055511772, DOI: doi:10.1039/C5TA06381G

## Description

### Technical Field

The present invention relates to a method of manufacturing a separator including a functional binder, and more particularly to a method of manufacturing a separator configured such that one surface of a polyolefin substrate is coated with inorganic particles and a functional binder having improved properties.

### Background Art

Thorough research is ongoing with the goal of increasing the stability of a battery separator, especially a separator for a lithium ion secondary battery. A safety-reinforced separator (SRS), which is currently mass-produced, is configured such that the surface of a polyolefin-based substrate is coated with inorganic particles and a binder. A volume in which a liquid electrolyte is placed is increased by virtue of the porous structure due to the inorganic particles and the binder to thus increase lithium ion conductivity and an electrolyte impregnation ratio, whereby both the performance and the stability of an electrochemical device using the separator may be improved. In this regard, Patent Document 1 discloses an organic-inorganic hybrid porous separator and an electrochemical device using the same.

In order to maintain the stability of the SRS, the adhesion characteristics of a binder-inorganic material and a substrate-binder for preventing the inorganic material from being stripped from the surface of a polyolefin substrate are regarded as very important. A binder that is currently available is of a PVDF type and has low adhesion characteristics. Hence, there is a need to develop a novel binder in order to improve stability.

A PVDF-based binder may exhibit high adhesion to a cathode but low adhesion to an anode using an SBR (Styrene-Butadiene Rubber)-based binder. Furthermore, a PVDF-based binder is hydrophobic and thus exhibits poor wetting properties of a separator in an electrolyte, undesirably deteriorating the power output of a battery.

A currently available SRS is problematic in that it cannot withstand the dissolution of a transition metal of a cathode material under conditions of high temperature and high voltage, which may frequently occur during the driving of an electric vehicle. A conventional binder is incapable of adsorbing the dissolved transition metal, undesirably shortening the life cycle of the battery.

Since damage to the separator due to heat and pressure is irreversible, problems of low power output and low safety of the battery attributed to the separator once damaged cannot be overcome.

Many attempts have been made to introduce a compound containing a hydrophilic group in order to improve the properties of a separator. Non-Patent Document 1, which is aimed at improving the wetting properties of a commercially available PP (Polypropylene) separator of a lithium ion battery, discloses a surface-coating process for immersing a PP substrate in tannic acid, which is a natural vegetable polyphenyl. However, the surface of PP is hydrophobic, and thus tannic acid, having a large number of hydroxyl groups, is not uniformly distributed on the surface of PP, and the coating layer does not exhibit sufficient durability during the manufacture of an electrochemical device using the same and upon the charge/discharge thereof.

Non-Patent Document 2, which is aimed at improving the wetting properties of a PP substrate serving as a separator of a lithium ion battery, discloses a coating process using pyrogallic acid. Like Non-Patent Document 1, Non-Patent Document 2 enables realization of a uniform coating layer in a short time because pyrogallic acid has low physicochemical affinity to PP, which is hydrophobic, but the coating layer does not have sufficient durability and uniformity during the manufacture of an electrochemical device using the same and during charge/discharge thereof.

Non-Patent Documents 3 to 6 disclose a binder having self-healing performance, such as a capsule-shaped binder for improving the properties of an anode containing silicon. Such a binder is developed in order to solve the problem that occurs when using a silicon anode having high capacity, that is, low bondability of a conventional PVDF to silicon, but is difficult to directly apply to a currently useful SRS binder.

With the goal of improving the wetting properties of a separator, the technique for disposing a binder film on the outermost layer of an SRS is disclosed in Patent Document 2. Although hydrophilicity is improved due to the film of the outermost layer, it is difficult to access the pores formed by the inorganic particles and the binder, making it impossible to improve the performance and stability of an electrochemical device.

Patent Document 3 discloses a battery separator and a non-aqueous electrolyte battery using the same. In the battery separator including a resin porous film composed mainly of a thermoplastic resin and a multilayered porous film comprising a heat-resistant porous layer composed mainly of heat-resistant particles, the heat-resistant porous layer has a thickness of 1 to 15 µm, and the peel strength of the resin porous film and the heat-resistant porous layer at 180° is 0.6 N/cm or more.

Both the present invention and Patent Document 3 are related to a separator for a lithium secondary battery having improved thermal safety. However, the binder of the present invention may exhibit not only thermal stability but also an enhancement in adhesion, adsorption of a transition metal of a cathode material, self-healing, and the like, which are never noted in Patent Document 3. Hence, there is a significant difference in the molecular structure of a binder therebetween. Specifically, the binder of the present invention contains large numbers of -O and hydroxyl (OH) functional groups in the molecules thereof, whereas the binder of Patent Document 3 includes an N-vinylacetamide polymer or a water-soluble cellulose derivative, along with a crosslinked acrylic resin.

Meanwhile, Patent Document 3 uses xanthan gum, which is used as the binder of the present invention, as a thickener. The binder and the thickener are remarkably different in terms of the amounts thereof. In Patent Document 3, the binder is used in an amount of 1.1 parts by mass or more based on 100 parts by mass of heat-resistant particles, whereas the thickener is used in an amount of 0.1 parts by mass or more based on 100 parts by mass of heat-resistant particles. Here, the binder and the thickener differ by about 10 times in terms of the amounts thereof, and thus it can be found that the binder and the thickener are incompatible with each other. Although the present invention and Patent Document 3 are similar in that they both disclose the use of xanthan gum, the specific end uses thereof are different, and Patent Document 3 does not mention the technical features of the binder that is used in the present invention.

Non-Patent Document 7, which is a review paper on natural materials used in electrochemical energy storage devices, discloses the use of natural materials such as amylopectin, xanthan gum and the like as the binder. However, the binder of Non-Patent Document 7 is used for a cathode or an anode and is thus different in terms of the end use and functionality from those of the binder of the separator used in the present invention. In particular, the binder for a separator of the present invention has properties quite different from those of the material used for a cathode or an anode because the separator includes an inorganic material, and the detailed technical field therebetween is different.

In order to maintain the thermal stability of the SRS including inorganic particles as described above, techniques for increasing the binder-inorganic material adhesion and the substrate-binder adhesion while preventing internal shorting from occurring by performing self-healing of damage to the separator, enhancing the adhesion of the separator to a cathode and an anode, and withstanding the dissolution of a transition metal of a cathode material have not yet been introduced to date.

Patent Document 4 (WO 2016/034020 A1) describes a preparation method for a ceramic and gel polymer multi-layer composite lithium battery separator having high thermal safety and a strong ability to maintain electrolyte solution.

Patent Document 5 (US 2016/028067 A1) relates to a thin, freestanding, microporous polyolefin web with good heat resistance and dimensional stability including an inorganic surface layer.
Korean Patent No. 10-0775310
Korean Patent No. 10-1535198
Korean Patent Application Publication No. 2011-0031998
WO 2016/034020 A1
US 2016/028067 A1

Lei Pan et al., "Tannic-Acid-Coated Polypropylene Membrane as a Separator for Lithium ion Batteries", ACS Appl. Mater. Interfaces, 7(29), 16003-16010(2015).

Haibin Wang et al., "Pyrogallic acid coated polypropylene membranes as separators for lithium-ion batteries", J. Mater. Chem. A, 3, 20535-20540 (2015).

S.R. White et al., "Autonomic healing of polymer composites", Nature, 409, 794-797 (2001).

Benjamin C-K Tee et al., "Pressure and flexionsensitive electronic skin with repeatable ambient self-healing capability", Nature nanotechnology, 7, 825 (2012).

Chao Want et al., "Self-healing chemistry enables the stable operation of silicon microparticle anodes for high-energy lithium-ion batteries", Nature Chemistry, 5, 1042-1048 (2013).

You Kyeong Jeong et al., "Millipede-inspired Structural Design Principles for High Performance Polysaccharide Binders in Silicon Anodes", Energy & Environmental Science, 8 1224 (2015).

Hua Wang et al., "Nature-Inspired Electrochemical Energy-Storage Materials and Devices", Adv. Energy Materials 1601709 (2016).

### Disclosure

### Technical Problem

Accordingly, the present invention is intended to provide a battery separator including a functional binder, in which the separator includes a porous polyolefin substrate and an organic-inorganic hybrid porous coating layer formed on at least one surface of the substrate and configured to include inorganic particles and a binder compound, thus increasing binder-inorganic material adhesion and substrate-binder adhesion while preventing internal shorting from occurring by performing self-healing of damage to the separator, enhancing the adhesion of the separator to a cathode and an anode, and withstanding the dissolution of a transition metal of a cathode material.

### Technical Solution

Therefore, the present invention provides a method of manufacturing a battery separator, comprising (a) a polyolefin-based substrate and (b) an active layer configured such that at least one region selected from the group consisting of a surface of the substrate and a portion of pores in the substrate is coated with a mixture of inorganic particles and a binder, in which the inorganic particles in the active layer are connected and fixed to each other by the binder, and a porous structure is formed due to the interstitial volume between the inorganic particles, the binder containing 10 wt% or more of a hydroxyl group per molecule thereof, the method comprising the steps of:
1) preparing a binder solution by dissolving a binder in a solvent;
2) adding and mixing the binder solution obtained in the step 1) with inorganic particles; and
3) coating at least one region selected from the group consisting of a surface of a polyolefin-based substrate and a portion of pores in the substrate with a solution obtained in the step 2) and performing drying,
wherein the binder contains 10 wt% or more of a hydroxyl group per molecule thereof; and wherein the solvent comprises water and acetone mixed at a weight ratio of 95:5 to 0:100.

Specifically, the binder may include at least one selected from among tannic acid, pyrogallic acid, amylose, amylopectin, and xanthan gum, or the binder may be a mixture comprising 1) a mixture comprising at least one selected from among tannic acid, pyrogallic acid, amylose, amylopectin, and xanthan gum and 2) a mixture comprising at least one selected from among polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, an acrylonitrilestyrene-butadiene copolymer, and polyimide.

The inorganic particles may be at least one selected from the group consisting of inorganic particles having a dielectric constant of 5 or more, inorganic particles having piezoelectricity, and inorganic particles having lithium ion transfer capacity.

The inorganic particles having a dielectric constant of 5 or more may be SrTiO₃, SnO₂, CeO₂, MgO, NiO, CaO, ZnO, ZrO₂, Y₂O₃, Al₂O₃, TiO₂ or SiC; the inorganic particles having piezoelectricity may be BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) or hafnia (HfO₂); and the inorganic particles having lithium ion transfer capacity may be lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ (LiₓSi_{y}S_{z}, 0<x<3, 0<y<2, 0<z<4) -based glass or P₂S₅ (LiₓP_{y}S_{z}, 0<x<3, 0<y<3, 0<z<7) -based glass.

Specifically, the inorganic particles may include at least one selected from among Al₂O₃, AlOOH, and Mg(OH)₂.

The polyolefin-based substrate may be at least one selected from the group consisting of high-density polyethylene, low-density polyethylene, linear low-density polyethylene, ultrahigh-molecular-weight polyethylene, and polypropylene.

The solvent comprises water and acetone mixed at a weight ratio of 95:5 to 0:100, preferably 75:25 to 0:100, more preferably 60:40 to 0:100, even more preferably 50:50 to 0:100, and most preferably 40:60 to 0:100. In an embodiment of the present invention, the optimal ratio thereof is 75:25.

The separator may be employed in an electrochemical device. Here, the electrochemical device may be a lithium secondary battery.

### Description of Drawings

FIG. 1 shows the unit structure of amylose, which is an example of a binder according to the present invention;
FIG. 2 shows the unit structure of amylopectin, which is an example of a binder according to the present invention;
FIG. 3 shows the unit structure of xanthan gum, which is an example of a binder according to the present invention;
FIG. 4 shows the hydrogen bonding between an electrode and a separator when using tannic acid as a binder according to an embodiment of the present invention;
FIG. 5 shows the improvement in wetting properties upon the use of tannic acid according to an embodiment of the present invention;
FIG. 6 shows the adhesion mechanism for a transition metal of a cathode material through hydrogen bonding;
FIG. 7 shows the results of comparison for thermal shrinkage when using tannic acid as the binder according to an embodiment of the present invention;
FIG. 8 conceptually shows the structure of an SRS using the binder of the present invention;
FIG. 9 conceptually shows the self-healing performance upon the use of the binder of the present invention;
FIG. 10 shows the results of measurement of physical properties of the separator according to an embodiment of the present invention; and
FIG. 11 shows the results of measurement of physical properties of the separator depending on the acetone concentration according to an embodiment of the present invention.

### Best Mode

The present invention is directed to a method of manufacturing a battery separator including a functional binder, which may simultaneously exhibit superior thermal safety, electrochemical safety, lithium ion conductivity, electrolyte impregnation ratio, self-healing performance, and the like, compared to a polyolefin-based separator for use in a conventional battery separator, and also in which the use of the functional binder containing a large amount of a hydrophilic functional group is capable of enhancing the adhesion of a battery-separator and is capable of adsorbing a transition metal dissolved at a cathode.

According to the present invention, the battery separator includes (a) a polyolefin-based substrate and (b) an active layer configured such that at least one region selected from the group consisting of a surface of the substrate and a portion of pores in the substrate is coated with a mixture of inorganic particles and a binder, in which the inorganic particles in the active layer are connected and fixed to each other by the binder, and a porous structure is formed due to the interstitial volume between the inorganic particles, the binder containing 10 wt% or more of a hydroxyl group per molecule thereof. Here, the amount of hydroxyl group per molecule thereof preferably falls in the range of 12 wt% to 50 wt%, more preferably 15 wt% to 45 wt%, much more preferably 18 wt% to 40 wt%, and even more preferably 18 wt% to 38 wt%. If the amount of the hydroxyl group is less than 10 wt%, the amount of the hydrogen-bonding functional group of the binder is not sufficient, and thus the functionality desired in the present invention is not sufficiently exhibited. On the other hand, if the amount of the hydroxyl group exceeds 50 wt%, there may arise a problem in that the movement of the electrolyte is restricted due to strong hydrogen bonding.

Specifically, the binder may include at least one selected from among tannic acid, pyrogallic acid, amylose, amylopectin, and xanthan gum, or the binder may be a mixture of 1) a mixture comprising at least one selected from among tannic acid, pyrogallic acid, amylose, amylopectin, and xanthan gum and 2) a mixture comprising at least one selected from among polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, an acrylonitrile-styrene-butadiene copolymer, and polyimide.

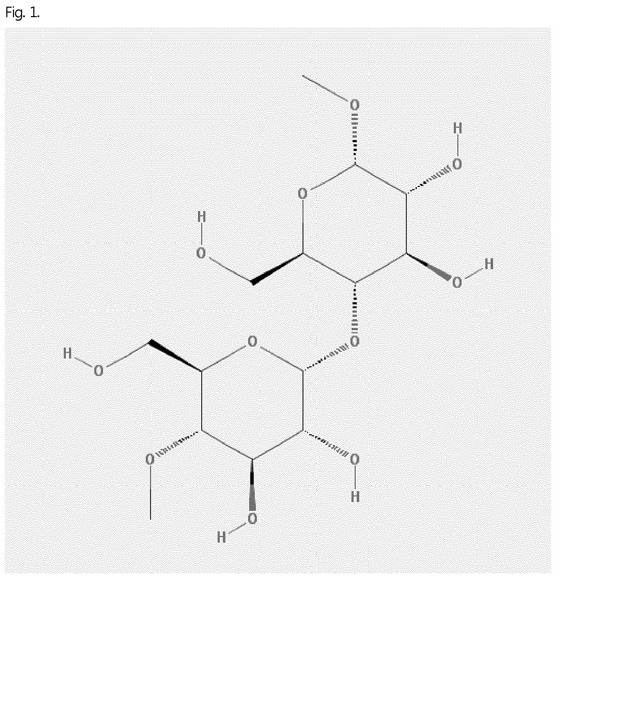

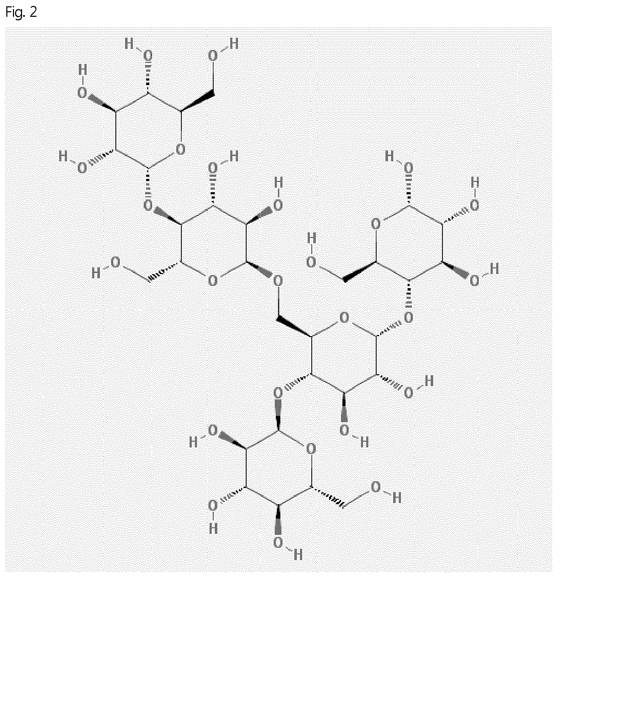

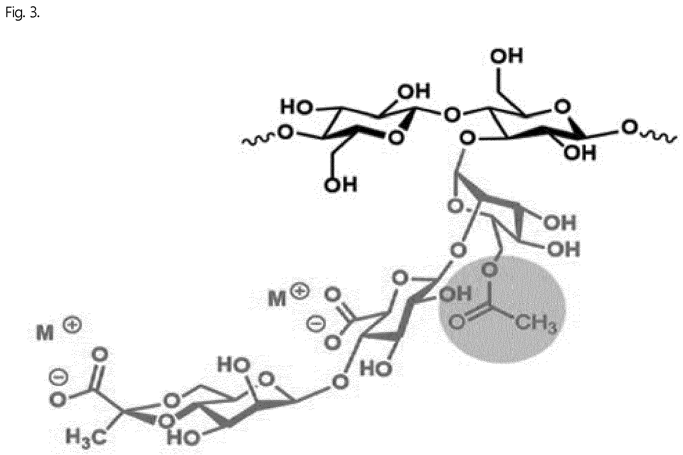

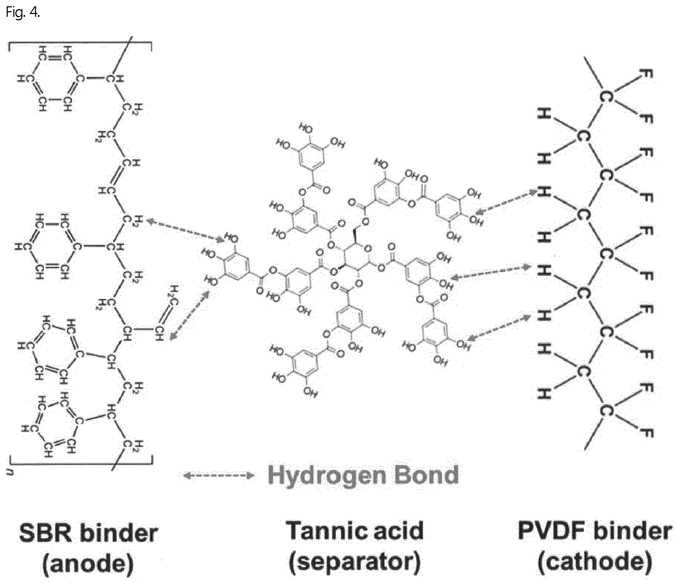

The binder containing 10 wt% or more of a hydroxyl group per molecule thereof is exemplified by amylose (FIG. 1), amylopectin (FIG. 2), xanthan gum (FIG. 3), and tannic acid (FIG. 4). The amounts of OH per molecule of amylose, amylopectin and xanthan gum are 18 wt%, 25 wt% and 32 wt%, respectively. In all of the cases, the amount of hydroxyl group (OH) is 10 wt% or more, from which strong hydrogen bonding can be confirmed to be formed. Here, the hydroxyl group is considered to be an OH group, and excludes a carboxyl group (COOH).

According to the present invention, the binder is capable of strongly binding to both a cathode and an anode by means of the hydrophilic functional group. The molecular bonding relationship therefor is schematically illustrated in FIG. 4.

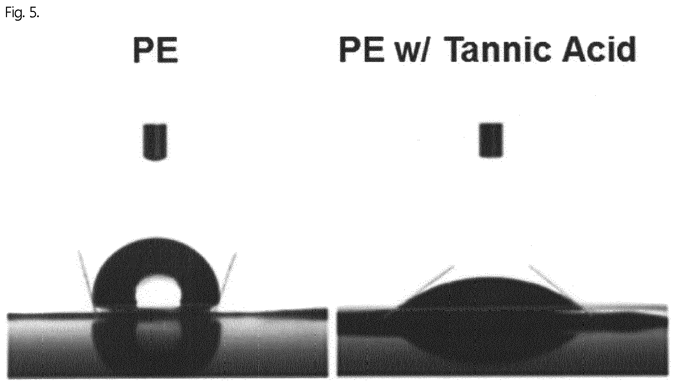

In the case where a hydrophilic binder is used, a conventional PE substrate is hydrophobic and thus exhibits low affinity to water, but the use of tannic acid, which is an example of the binder according to the present invention, results in conversion into hydrophilicity (FIG. 5).

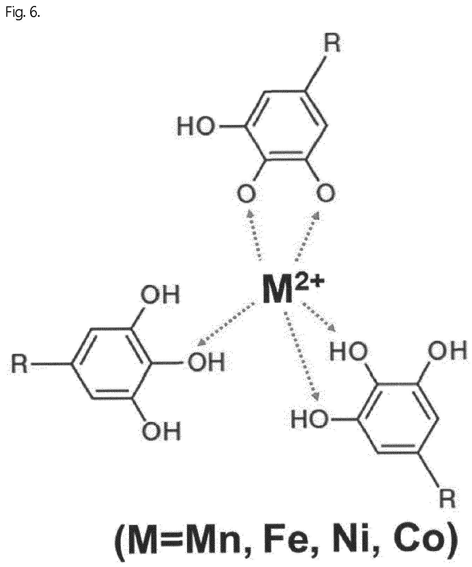

Moreover, the adsorption mechanism for the transition metal of a cathode material by means of the binder containing a hydrophilic group according to the present invention is illustrated in FIG. 6.

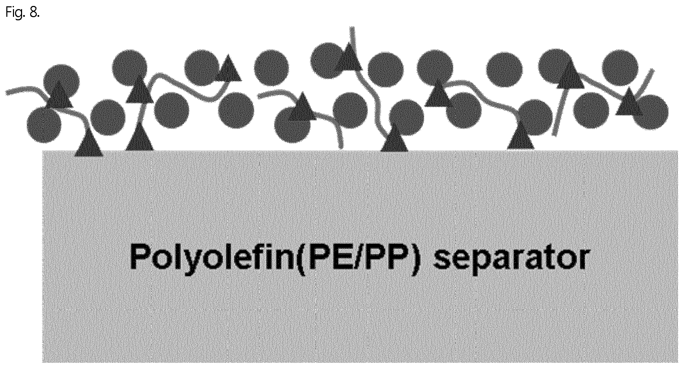

FIG. 8 conceptually illustrates the separator according to the present invention. A typical binder is configured such that no great attraction acts between the ends or the middle portions of the binder, but the binder according to the present invention is able to retain strong hydrogen bonding due to the -O/-OH group. In FIG. 8, the triangular shape denotes a hydroxyl group or a hydrophilic group. The circle denotes inorganic particles.

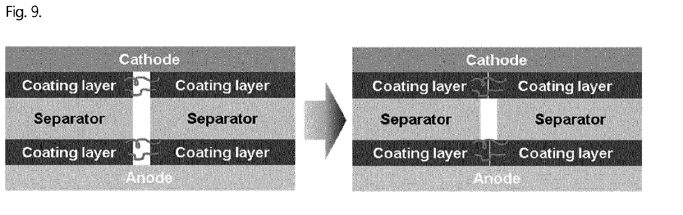

In the case where the separator is partially damaged and thus internal shorting occurs, as shown in the left of FIG. 9, the damaged portion may be self-healed by virtue of the inner hydrogen bonding of the binder. Thereby, internal shorting may be prevented from occurring.

Hereinafter, a detailed description will be given of the present invention. Prior thereto, it must be understood that the terms or words used in the description and the claims of the present invention are not to be construed limitedly as having typical or dictionary meanings, but should be interpreted as having the meanings and concepts of the invention in keeping with the scope of the invention based on the principle that the inventors can appropriately define the terms in order to describe the invention in the best way. Therefore, the examples described in the present specification are merely preferred embodiments of the present invention, and do not represent all of the technical ideas of the present invention, and thus it is to be understood that a variety of equivalents and modifications able to substitute therefor may be provided at the point of time at which the present invention is filed.

### <Example 1> Manufacture of lithium ion battery separator including functional binder

A mixture of polyvinylidene fluoride-co-chlorotrifluoroethylene (PVdF-CTFE) and tannic acid (at a weight ratio of 50:50) was added in an amount of about 5 wt% to acetone, and dissolved at a temperature of 50°C for about 12 hr, thus preparing a polymer solution. The polymer solution was added with a BaTiO₃ powder such that the ratio of BaTiO₃/ (PVdF-CTFE and tannic acid) was 90/10 (wt% ratio), after which the BaTiO₃ powder was crushed and pulverized using a ball-milling process for 12 hr or more, thus preparing a slurry. Although the particle size of BaTiO₃ of the slurry thus prepared may be controlled depending on the size (particle size) of beads used for the ball-milling process and the processing time of the ball-milling process, in Example 1 of the present invention, the powder was pulverized to about 400 nm to give a slurry. The slurry thus obtained was applied on a polyethylene separator (having a porosity of 45%) having a thickness of about 18 µm using a dip-coating process, and the coating thickness was adjusted to about 3 µm. Based on the results of measurement using a porosimeter, the pore size and porosity in the active layer applied on the polyethylene separator were 0.5 µm and 58%, respectively.

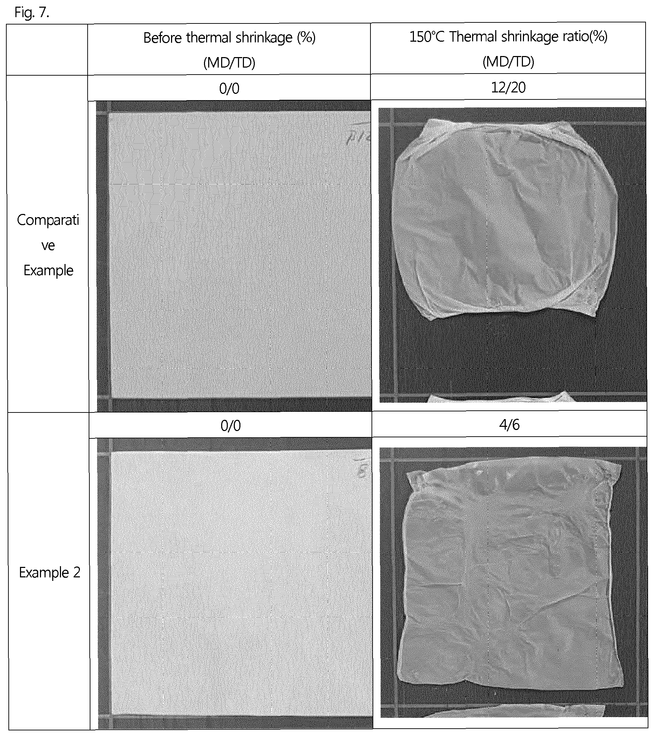

### <Comparison of Example 2 and Comparative Example 1> Comparison of thermal shrinkage properties of lithium ion battery separator including functional binder (FIG. 7)

The battery separator of Example 2 was manufactured in the same manner as in Example 1, with the exception that the weight ratio of the binder to the inorganic material in the coating composition was changed to 15:85. The battery separator of Comparative Example 1 was manufactured under the same conditions as in Example 2, with the exception that tannic acid was not used in the binder. The coating layers in Comparative Example 1 and Example 2 were formed to thicknesses of 5 µm and 3 µm, respectively. Based on the results of comparison of thermal shrinkage at the same temperature of 150°C in Example 2 and Comparative Example 1, Example 2 according to the present invention exhibited superior properties compared to the conventional separator (Comparative Example 1) containing no tannic acid. In particular, the coating layer in Comparative Example 1 was thicker, but the thermal shrinkage properties thereof were inferior compared to Example 2. In FIG. 7, MD designates the machine direction and TD designates the transverse direction, and MD and TD show the lengths in the machine direction and transverse direction, respectively. The numerals in the upper rows of each table designate MD/TD shrinkage ratio (%) before and after thermal shrinkage.

### <Examples 3, 4 and 5> Comparison of separator properties depending on hydroxyl group in binder molecule

The separators of Examples 3, 4 and 5 were manufactured in the same manner as in Example 1, with the exception that the inorganic particles comprising alumina and boehmite at a weight ratio of 85:15 were used, and the inorganic material and the binder were mixed at a weight ratio of 75:25. Furthermore, as the binder, a mixture of PVdF-HFP : PVdF-CTFE : hydroxyl-group-containing binder was prepared at a weight ratio of 22:1:2, and the solvent was 100% acetone. As the hydroxyl-group-containing binder, xanthan gum, tannic acid and amylose were used. The polyolefin substrate was PP.

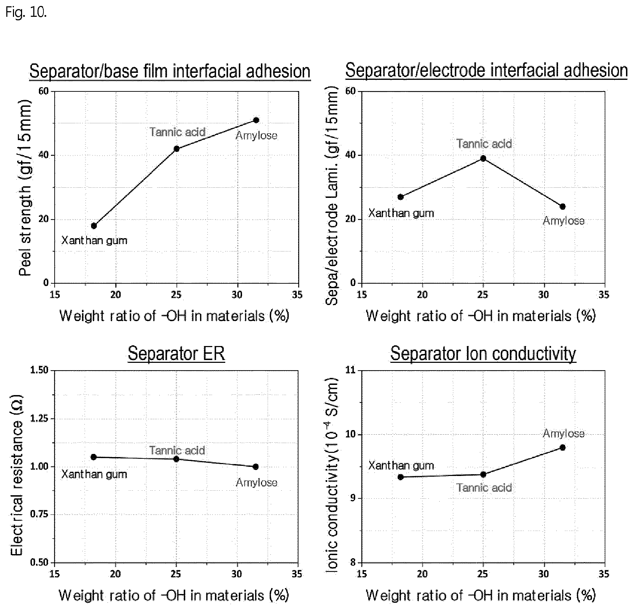

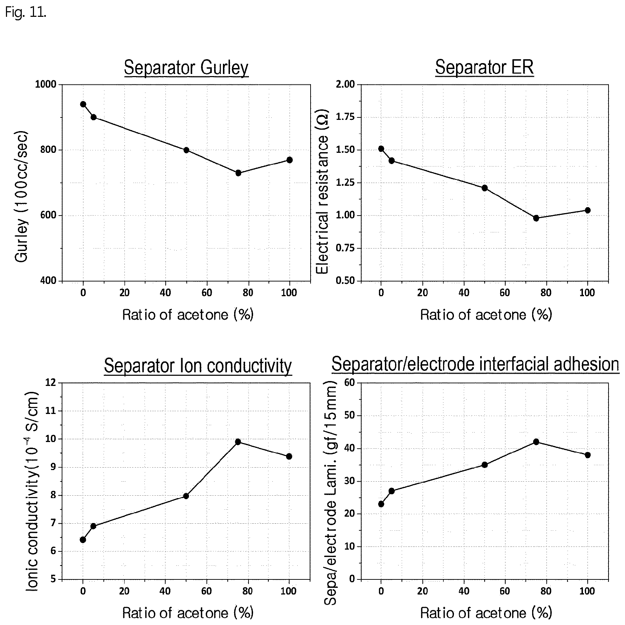

FIG. 10 shows the results of comparison of the properties of the separators of Examples 3, 4 and 5. As used herein, the term, base film, refers to a polyolefin substrate. As the weight proportion of the hydroxyl group in the binder was higher, the adhesion at the interface between the substrate and the inorganic material coating layer was enhanced, and the ion conductivity was also increased. As shown in FIGS. 10 and 11, the separator/base film interfacial adhesion was measured in a manner in which a piece of double-sided tape was attached to glass, the inorganic material coating layer of SRS was attached to the remaining surface of the double-sided tape, and the peel strength of the inorganic material coating layer and the substrate was measured upon the separation of the substrate. The separator/electrode interfacial adhesion was measured in a manner in which a piece of double-sided tape was attached to glass, the electrode was attached to the remaining surface of the double-sided tape, and the peel strength of the electrode and the SRS was measured upon the separation of the substrate. Electrical resistance (ER) and ion conductivity were measured in typical manners, and a separator Gurley value was determined by measuring air permeability. Here, the air permeability was measured using a Gurley-type densometer (No. 158) made by Toyoseiki in accordance with a Gurley method of Japanese Industrial Standard (JIS). Specifically, the air permeability indicates the time (sec) required to pass 100 cc of air through the separator of 1 inch² under constant air pressure of 4.8 inch.

The properties of the separators of Examples 3, 4 and 5 are shown in Table 1 below.

**[Table 1]**

| Lot | Xanthan gum | Tannic acid | Amylose |
|---|---|---|---|
| Base film | DB0901(PP/PE/PP) | | |
| Thickness (µm) | 18.5 | 18.4 | 18.5 |
| Loading (g/m²) | 9.12 | 9.52 | 9.95 |
| Gurley (s/100 cc) | 765 | 770 | 400 |
| Sepa/Electrode Lami. (gf/15 mm) | 28 | 38 | 23 |
| Peel Strength (gf/15 mm) | 19 | 42 | 50 |
| ER (ohm) | 1.05 | 1.04 | 1.00 |
| Ion conductivity (X10⁻⁴S/cm) | 9.34 | 9.38 | 9.80 |

### <Examples 6 (Reference - not part of the claimed subject matter), 7, 8, 9 and 10> Comparison of properties depending on amount of acetone in solvent

The separators of Examples 6, 7, 8, 9 and 10 were manufactured in the same manner as in Example 3, with the exception that tannic acid was used as the hydroxyl-group-containing binder, and the solvent was prepared by mixing water and acetone at weight ratios of 100:0 (Reference, not part of the claimed subject matter), 95:5, 50:50, 25:75, and 0:100. Changes in the properties depending on the weight ratio of water and acetone are shown in FIG. 11.

Vastly superior effects were exhibited at a 25:75 ratio of water and acetone. Taking into consideration the air permeability, electrical resistance, ion conductivity, and interfacial adhesion, the ratio of water to acetone fell in the range of 50:50 to 0:100. The ratio of water to acetone has an influence on the structure due to the drying of the coating layer, and thus the optimal ratio may vary depending on the amount of the hydroxyl group in the binder. In consideration of the amount of the hydroxyl group according to the present invention, the range of ratio of water to acetone may be expanded to 60:40 to 0:100.

The properties of the separators of Examples 6, 7, 8, 9 and 10 are shown in Table 2 below.

**[Table 2]**

| Water : Acetone | 100:0* | 95:5 | 50:50 | 25:75 | 0:100 |
|---|---|---|---|---|---|
| Binder | Tannic acid | | | | |
| Base film | DB0901(PP/PE/PP) | | | | |
| Thickness (µm) | 18.3 | 18.5 | 18.2 | 18.3 | 18.4 |
| Loading (g/m²) | 9.23 | 9.12 | 9.52 | 9.51 | 9.52 |
| Gurley (s/100cc) | 940 | 900 | 800 | 730 | 770 |
| Sepa/Electrode Lami. (gf/15 mm) | 23 | 27 | 35 | 42 | 38 |
| ER (ohm) | 1.51 | 1.42 | 1.21 | 0.98 | 1.04 |
| Ion conductivity (X10⁻⁴S/cm) | 6.42 | 6.90 | 7.97 | 9.90 | 9.38 |

| | | | | | |
|---|---|---|---|---|---|
| *Reference - not part of the claimed subject matter | | | | | |

### Industrial Applicability

According to the present invention, a separator is manufactured to include a porous polyolefin substrate and an organic-inorganic hybrid porous coating layer formed on at least one surface of the substrate and configured to include inorganic particles and a binder compound, thus increasing the binder-inorganic material adhesion and the substrate-binder adhesion while preventing internal shorting from occurring by performing self-healing of damage to the separator, enhancing the adhesion of the separator to a cathode and an anode, and withstanding the dissolution of a transition metal of a cathode material.

## Claims

1. A method of manufacturing a battery separator the separator comprising:
(a) a polyolefin-based substrate; and
(b) an active layer configured such that at least one region selected from the group consisting of a surface of the substrate and a portion of pores in the substrate is coated with a mixture of inorganic particles and a binder, wherein the inorganic particles in the active layer are connected and fixed to each other by the binder, and a porous structure is formed due to an interstitial volume between the inorganic particles, the binder containing 10 wt% or more of a hydroxyl group per molecule thereof;
the method comprising the steps of:
1) preparing a binder solution by dissolving a binder in a solvent;
2) adding and mixing the binder solution obtained in the step 1) with inorganic particles; and
3) coating at least one region selected from the group consisting of a surface of a polyolefin-based substrate and a portion of pores in the substrate with a solution obtained in the step 2) and performing drying,
wherein the binder contains 10 wt% or more of a hydroxyl group per molecule thereof; and wherein the solvent comprises water and acetone mixed at a weight ratio of 95:5 to 0:100.

2. The method of manufacturing a battery separator of claim 1, wherein the binder includes at least one selected from among tannic acid, pyrogallic acid, amylose, amylopectin, and xanthan gum.

3. The method of manufacturing a battery separator of claim 1, wherein the binder is a mixture of 1) a mixture comprising at least one selected from among tannic acid, pyrogallic acid, amylose, amylopectin, and xanthan gum and 2) a mixture comprising at least one selected from among polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, an acrylonitrile-styrene-butadiene copolymer, and polyimide.

4. The method of manufacturing a battery separator of claim 1, wherein the inorganic particles are at least one selected from the group consisting of inorganic particles having a dielectric constant of 5 or more, inorganic particles having piezoelectricity, and inorganic particles having lithium ion transfer capacity.

5. The method of manufacturing a battery separator of claim 4, wherein the inorganic particles having a dielectric constant of 5 or more are SrTiO₃, SnO₂, CeO₂, MgO, NiO, CaO, ZnO, ZrO₂, Y₂O₃, Al₂O₃, TiO₂ or SiC;
the inorganic particles having piezoelectricity are BaTiO₃, Pb (Zr, Ti)O₃ (PZT), Pb₁₋ₓLaₓZr_{1-y}Ti_{y}O₃ (PLZT), PB(Mg₃Nb_{2/3})O₃-PbTiO₃ (PMN-PT) or hafnia (HfO₂); and
the inorganic particles having lithium ion transfer capacity are lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ (LiₓSi_{y}S_{z}, 0<x<3, 0<y<2, 0<z<4) -based glass or P₂S₅ (LiₓP_{y}S_{z}, 0<x<3, 0<y<3, 0<z<7) -based glass.

6. The method of manufacturing a battery separator of claim 4, wherein the inorganic particles include at least one selected from among Al₂O₃, AlOOH, and Mg(OH)₂.

7. The method of manufacturing a battery separator of claim 1, wherein the polyolefin-based substrate is at least one selected from the group consisting of high-density polyethylene, low-density polyethylene, linear low-density polyethylene, ultrahigh-molecular-weight polyethylene, and polypropylene.

## Patentansprüche

1. Verfahren zur Herstellung eines Batterie-Separators, wobei der Separator umfasst:
(a) ein Substrat auf Polyolefinbasis; und
(b) eine Aktivschicht, die so konfiguriert ist, dass zumindest ein Bereich, ausgewählt aus der Gruppe bestehend aus einer Oberfläche des Substrats und einem Teil der Poren in dem Substrat, mit einer Mischung von anorganischen Partikeln und einem Bindemittel beschichtet ist, worin die anorganischen Partikel in der Aktivschicht durch das Bindemittel verbunden und miteinander fixiert sind und worin eine poröse Struktur durch ein Zwischenraumvolumen zwischen den anorganischen Partikeln gebildet wird, wobei das Bindemittel 10 Gew.-% oder mehr einer Hydroxylgruppe je Molekül hiervon umfasst;
wobei das Verfahren die Schritte umfasst:
1) Herstellen einer Bindemittellösung durch Auflösen eines Bindemittels in einem Lösungsmittel;
2) Zugeben und Vermischen der im Schritt 1) erhaltenen Bindemittellösung mit anorganischen Partikeln; und
3) Beschichten von zumindest einem Bereich, ausgewählt aus der Gruppe bestehend aus einer Oberfläche eines Substrats auf Polyolefinbasis und einem Teil der Poren in dem Substrat, mit einer im Schritt 2) erhaltenen Lösung und Trocknen,
worin das Bindemittel 10 Gew.-% oder mehr einer Hydroxylgruppe je Molekül hiervon enthält; und worin das Lösungsmittel Wasser und Aceton umfasst, die in einem Gewichtsverhältnis von 95:5 bis 0:100 vermischt sind.

2. Verfahren zur Herstellung eines Batterie-Separators gemäß Anspruch 1, worin das Bindemittel zumindest eines umfasst, ausgewählt aus der Gruppe bestehend aus Gerbsäure, Pyrogallussäure, Amylose, Amylopektin und Xanthan.

3. Verfahren zur Herstellung eines Batterie-Separators gemäß Anspruch 1, worin das Bindemittel eine Mischung ist von 1) einer Mischung, umfassend zumindest eines, das ausgewählt ist unter Gerbsäure, Pyrogallussäure, Amylose, Amylopektin und Xanthan, und 2) einer Mischung, umfassend zumindest eines, ausgewählt unter Polyvinylidenfluorid-co-hexafluorpropylen, Polyvinylidenfluorid-co-trichlorethylen, Polymethylmethacrylat, Polyacrylonitril, Polyvinylpyrrolidon, Polyvinylacetat, Polyethylen-covinylacetat, Polyethylenoxid, Celluloseacetat, Celluloseacetatbutyrat, Celluloseacetatpropionat, Cyanoethylpullulan, Cyanoethylpolyvinylalkohol, Cyanoethylcellulose, Cyanoethylsucrose, Pullulan, Carboxylmethylcellulose, einem Acrylonitril-StyrolButadien-Copolymer und Polyimid.

4. Verfahren zur Herstellung eines Batterie-Separators gemäß Anspruch 1, worin die anorganischen Partikel zumindest eines sind, ausgewählt aus der Gruppe bestehend aus anorganischen Partikeln mit einer Dielektrizitätskonstante von 5 oder größer, anorganischen Partikeln mit Piezoelektrizität, und anorganischen Partikeln mit Lithiumionen-Übertragungsfähigkeit.

5. Verfahren zur Herstellung eines Batterie-Separators gemäß Anspruch 4, worin die anorganischen Partikel mit einer Dielektrizitätskonstante von 5 oder mehr SrTiO₃, SnO₂, CeO₂, MgO, NiO, CaO, ZnO, ZrO₂, Y₂O₃, Al₂O₃, TiO₂ oder SiC sind;
die anorganischen Partikel mimt Piezoelektrizität BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) oder Hafniumoxid (HfO₂) sind; und
die anorganischen Partikel mit Lithiumionen-Übertragungsfähigkeit Lithiumphosphat (Li₃PO₄), Lithiumtitanphosphat (LiₓTi_{y}(PO₄)₃, 0<x<2, 0<y<3), Lithiumaluminiumtitanphosphat (LiₓAl_{y}Ti_{z}(PO₄)₃, 0<x<2, 0<y<1, 0<z<3), auf (LiAlTiP)ₓO_{y}-basierendes Glas (0<x<4, 0<y<13), Lithiumlanthantitanat (LiₓLa_{y}TiO₃, 0<x<2, 0<y<3), Lithiumgermaniumthiophosphat (LiₓGe_{y}P_{z}S_{w}, 0<x<4, 0<y<1, 0<z<1 0<w<5), Lithiumnitrid (LiₓN_{y}, 0<x<4, 0<y<2), SiS₂ (LiₓSi_{y}S_{z}, 0<x<3, 0<y<2, 0<z<4)-basiertes Glas oder P₂S₅ (LiₓP_{y}S_{z}, 0<x<3, 0<y<3, 0<z<7)-basiertes Glas sind.

6. Verfahren zur Herstellung eines Batterie-Separators gemäß Anspruch 4, worin die anorganischen Partikel zumindest eines umfassen, ausgewählt unter Al₂O₃, AlOOH und Mg(OH)₂.

7. Verfahren zur Herstellung eines Batterie-Separators gemäß Anspruch 1, worin das Substrat auf Polyolefinbasis zumindest eines ist, ausgewählt aus der Gruppe bestehend aus hochdichtem Polyethylen, niedrigdichtem Polyethylen, linearem Polyethylen niedriger Dichte, Polyethylen mit ultrahohem Molekulargewicht und Polypropylen.

## Revendications

1. Procédé de fabrication d'un séparateur pour batterie, le séparateur comprenant :
(a) un substrat à base de polyoléfine ; et
(b) une couche active agencée de sorte qu'au moins une région sélectionnée dans le groupe constitué d'une surface du substrat et d'une portion de pores dans le substrat soit revêtue d'un mélange de particules inorganiques et d'un liant, dans lequel les particules inorganiques dans la couche active sont interconnectées et fixées entre elles par le liant, et une structure poreuse est formée en raison d'un volume interstitiel entre les particules inorganiques, le liant contenant 10 % en poids ou plus d'un groupe hydroxyle par molécule de celui-ci ;
le procédé comprenant les étapes consistant à :
1) préparer une solution de liant par dissolution d'un liant dans un solvant ;
2) ajout et mélange de la solution de liant obtenue à l'étape 1) avec des particules inorganiques ; et
3) revêtir au moins une région sélectionnée dans le groupe constitué d'une surface d'un substrat à base de polyoléfine et d'une portion de pores dans le substrat avec une solution obtenue à l'étape 2) et en effectuant un séchage,
dans lequel le liant contient 10 % en poids ou plus d'un groupe hydroxyle par molécule de celui-ci ; et dans lequel le solvant comprend de l'eau et de l'acétone mélangées selon un rapport en poids de 95:5 à 0:100.

2. Procédé de fabrication d'un séparateur pour batterie selon la revendication 1, dans lequel le liant inclut au moins un élément sélectionné parmi l'acide tannique, l'acide pyrogallique, l'amylose, l'amylopectine et la gomme xanthane.

3. Procédé de fabrication d'un séparateur pour batterie selon la revendication 1, dans lequel le liant est un mélange de 1) un mélange comprenant au moins un élément sélectionné parmi l'acide tannique, l'acide pyrogallique, l'amylose, l'amylopectine et la gomme xanthane et 2) un mélange comprenant au moins un élément sélectionné parmi le fluorure de polyvinylidène-co-hexafluoropropylène, le fluorure de polyvinylidène-co-trichloroéthylène, le polyméthacrylate de méthyle, le polyacrylonitrile, le polyvinylpyrrolidone, le polyvinylacétate, le polyéthylène-co-acétate de vinyle, l'oxyde de polyéthylène, l'acétate de cellulose, le butyrate d'acétate de cellulose, le propionate d'acétate de cellulose, le cyanoéthylpullulane, le cyanoéthylalcool polyvinylique, la cyanoéthylcellulose, le cyanoéthylsaccharose, le pullulane, la carboxyméthylcellulose, un copolymère acrylonitrile-styrène-butadiène et le polyimide.

4. Procédé de fabrication d'un séparateur pour batterie selon la revendication 1, dans lequel les particules inorganiques sont au moins un élément sélectionné dans le groupe constitué de particules inorganiques présentant une constante diélectrique de 5 ou plus, de particules inorganiques présentant une piézoélectricité et de particules inorganiques présentant une capacité de transfert des ions lithium.

5. Procédé de fabrication d'un séparateur pour batterie selon la revendication 4, dans lequel les particules inorganiques présentant une constante diélectrique de 5 ou plus sont SrTiO₃, SnO₂, CeO₂, MgO, NiO, CaO, ZnO, ZrO₂, Y₂O₃, Al₂O₃, TiO₂ ou SiC ;
les particules inorganiques présentant une piézoélectricité sont BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) ou l'hafnie (HfO₂) ; et
les particules inorganiques présentant une capacité de transfert des ions lithium sont le phosphate de lithium (Li₃PO₄), le phosphate de titane de lithium (LiₓTi_{y}(PO₄)₃, 0<x<2, 0<y<3), le phosphate d'aluminium-titane de lithium (LiₓAl_{y}Ti₂(PO₄)₃, 0<x<2, 0<y<1, 0<z<3), le verre à base de (LiAlTiP)ₓO_{y} (0<x<4, 0<y<13), le titanate de lanthane-lithium (LiₓLa_{y}TiO₃, 0<x<2, 0<y<3), le thiophosphate de germanium-lithium (LiₓGe_{y}P_{z}S_{w}, 0<x<4, 0<y<1, 0<z<1, 0<w<5), le nitrure de lithium (LiₓN_{y}, 0<x<4, 0<y<2), le verre à base de SiS₂ (LiₓSi_{y}S_{z}, 0<x<3, 0<y<2, 0<z<4) ou le verre à base de P₂S₅ (LiₓP_{y}S_{z}, 0<x<3, 0<y<3, 0<z<7).

6. Procédé de fabrication d'un séparateur pour batterie selon la revendication 4, dans lequel les particules inorganiques incluent au moins un élément sélectionné parmi Al₂O₃, AlOOH et Mg(OH)₂.

7. Procédé de fabrication d'un séparateur pour batterie selon la revendication 1, dans lequel le substrat à base de polyoléfine est au moins un élément sélectionné dans le groupe constitué de polyéthylène à haute densité, de polyéthylène à basse densité, de polyéthylène linéaire à basse densité, de polyéthylène de masse moléculaire ultra-élevée et de polypropylène.
